# EUROPEAN PATENT SPECIFICATION

(11) **EP 2 085 648 B1**
(45) Date of publication and mention of the grant of the patent: **30.03.2011**
(21) Application number: 08001885.6
(22) Date of filing: 01.02.2008
(51) Int. Cl.: F16H 3/66

(54) **Automatic transmission**
Automatikgetriebe
Transmission automatique

(43) Date of publication of application: 05.08.2009
(73) Proprietor: GM Global Technology Operations, Inc., Detroit MI 48265-3 (US)
(72) Inventor: Rihn, Matthieu, 67100 Strasbourg (FR); Schreiber, Herve, 67210 Obernai (FR); Ensminger, Julien, 67530 Klingent (FR)
(74) Representative: Kraenzmer, Martin

(56) References cited:
- JP-A- 2004 347 075
- US-A- 5 667 454
- US-A1- 2006 025 275

## Description

The invention relates to an automatic transmission.

In the field of automatic transmissions, there is a tendency towards 7 or 8 speed transmissions. The interest of such transmissions is to obtain at least two so-called "overdrive" ratios after the ratio in which the maximum speed is reached. These ratios allow the engine to turn rather low on the freeway thereby reducing fuel consumption. Compared to a 7 speed transmission, a 8 speed transmission has the advantage to provide one more ratio that will improve the vehicle performance in terms of accelerations (this ratio will be added between the first gear and the gear of maximum vehicle speed), fuel economy and emission standards.

The documents GB 2 411 443 A and DE 10 2005 013 382 A1 describe such automatic transmissions.

The document JP 2004 347075 A discloses an automatic transmission according to the preamble of claim 1 and which comprises an input gearset, being, configured as a planetary gearset and an output gearset, being configured as Ravigneaux gearset.

The object of the invention is to realise a new economically interesting concept of an automatic transmission with 8 forward speeds and one reverse speed in which single upshifts and downshifts are done through a single clutch to single clutch transition.

This object is achieved by an automatic transmission comprising
an input shaft,
an output shaft,
a stationary member,
an input gearset being configured as planetary gearset, the planet pinions carrier of which being constantly fixed to the stationary member in order to provide reaction and the front sun gear being constantly connected to the input shaft;
an output gearset being configured as Ravigneaux gearset in which a first planet gear transmits the power from a first sun gear to a first ring gear and a second planet gear transmits the power from a second sun gear to a second ring gear and in which the long pinion meshes with the first planet gear and the long pinion meshes with the second ring gear, the planet pinions carrier of which being constantly connected to the output shaft; and
first, second, third and fourth rotating clutches and first and second braking clutches being operative to selectively connect members of the input gearset and of the output gearset with the stationary member or with other members of of the input gearset and of the output gearset to provide at least eight forward speed ratios and one reverse speed ratio.

The object is also achieved by a not claimed automatic transmission comprising
an input shaft,
an output shaft,
a stationary member,
an input gearset being configured as planetary gearset, the planet pinions carrier of which being constantly fixed to the stationary member in order to provide reaction and the front sun gear being constantly connected to the input shaft;
an output gearset being configured as Ravigneaux gearset in which a first planet gear transmits the power from a first sun gear to a first ring gear and a long pinion transmits the power from a second sun gear to a second ring gear and in which the long pinion meshes with the first planet gear, the planet pinions carrier of which being constantly connected to the output shaft (Out); and
first, second, third and fourth rotating clutches and first and second braking clutches being operative to selectively connect members of the input gearset and of the output gearset with the stationary member or with other members of of the input gearset and of the output gearset to provide at least eight forward speed ratios and one reverse speed ratio.

The automatic transmissions have only 2 gearsets and 6 clutches. The Ravigneaux gearset according to the invention allows to obtain a Ravigneaux gearset for which λ₁ < 0, λ₂ < 0, and K < 0 with high efficiency and good clearance between the gears.

Each of the two alternative configurations can be preferably used depending on the desired values of λ₁, λ₂ and K. It is also possible to inverse the front gearset and the rear gearset depending on the desired values of λ₁, λ₂ and K. Of course, the configurations are susceptible to be used if they were seen in a mirror.

In an embodiment of the invention, the first rotating clutch is configured to selectively couple the input shaft with a sun gear of the output gearset, the second rotating clutch is configured to selectively couple the input shaft with a ring gear of the output gearset, the third rotating clutch is configured to selectively couple a ring gear of the input gearset with a ring gear of the output gearset, the fourth rotating clutch is configured to selectively couple the ring gear of the input gearset with a sun gear of the output gearset, the first braking clutch is configured to selectively couple the planet pinions carrier of the input gearset with the ring gear of the output gearset and the second braking clutch is configured to selectively couple the sun gear of the output gearset with the stationary member.

In the following, the invention will be described in detail with reference to the FIGURES wherein
FIGURE 1 shows the first embodiment of, the invention,
FIGURE 2 shows the second embodiment of the invention,
FIGURE 3 shows the third embodiment of the invention,
FIGURE 4 shows the variant of the Ravigneaux gearset used according to the invention,
FIGURE 5 shows a second not claimed variant of the Ravigneaux gearset.

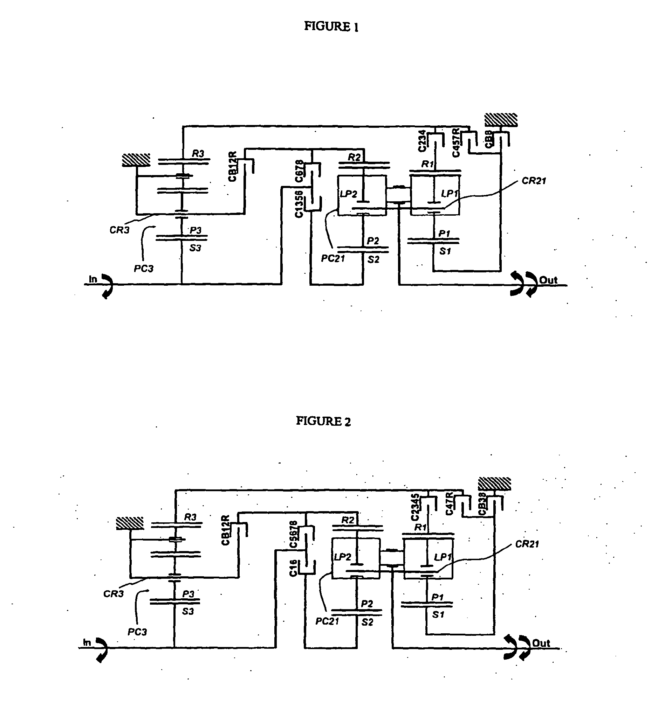

The automatic transmission of FIGURE 1 has an input gearset PC3 and an output gearset PC21. It has three decks which are called deck 1, deck 2 and deck 3 beginning from the rear side of the transmission.

The input gearset PC3 is a planetary gearset with a ring gear R3, a sun gear S3 and two planet gears P3. The planet pinions carrier CR3 of the input gearset PC3 is constantly connected to the stationary member and provides reaction. The sun gear S3 of the input gearset PC3 is constantly connected to the input shaft In.

The output gearset PC21 is a Ravigneaux gearset, that is to say that the gearset is composed of two decks (deck 2 and deck 1, deck 3 belonging to the input gearset) with a common carrier CR21 and a long pinion (LP1, LP2) making the link between the two decks. The long pinion can be stepped (which means that the front and the rear gears of the long pinion may have different gear data (tooth count, pressure and helix angles, etc.) or not stepped. The output gearset PC21 comprises two sun gears S1, S2, two ring gears R1, R2 and two planet gears P1, P2. The planet pinions carrier CR21 of the output gearset PC21 is constantly connected to the output shaft (Out).

There are four rotating clutches C136, C5678, C2345, C47R and two braking clutches CB12R, CB8. The first rotating clutch C136 is configured to selectively couple the input shaft In with the sun gear S2 of the second deck belonging to the output gearset PC21, the second rotating clutch C5678 is configured to selectively couple the input shaft In with the ring gear R2 of the second deck of the output gearset PC21, the third rotating clutch C2345 is configured to selectively couple the ring gear R3 of the input gearset PC3 with the ring gear R1 of the first deck of the output gearset PC21, the fourth rotating clutch C47R is configured to selectively couple the ring gear R3 of the input gearset PC3 with the sun gear S1 of the first deck of the output gearset PC21, the first braking clutch CB12R is configured to selectively couple the planet pinions carrier CR3 of the input gearset PC3 with the ring gear R2 of the second deck of the output gearset PC21 and the second braking clutch CB8 is configured to selectively couple the sun gear S1 of the first deck of the output gearset PC21 with the stationary member.

The following table shows examples of available ratios and the corresponding spreads as well as the shift logic sequence of the clutches of the automatic transmission according to FIGURE 1.

| Gear state | Gear ratio | Ratio step | CB12R static | CB8 static | C136 dynamic | C2345 dynamic | C47R dynamic | C5678 dynamic |
|---|---|---|---|---|---|---|---|---|
| Rev | - | | X | | | | X | |
| | 4,212 | | | | | | | |
| N | | -0,89 | | | | | | |
| 1st | 4,759 | | X | | X | | | |
| 2nd | 3,379 | 1,41 | X | | | X | | |
| 3rd | 2,234 | 1,51 | | | X | X | | |
| 4th | 1,674 | 1,33 | | | | X | X | |
| 5th | 1,249 | 1,34 | | | | X | | X |
| 6th | 1,000 | 1,25 | | | X | | | X |
| 7th | 0,862 | 1,16 | | | | | X | X |
| 8th | 0,716 | 1,20 | | X | | | | X |

These values are given for the following teeth ratios:

| | | | | |
|---|---|---|---|---|
| R3/S3 | R3/S2 | R1/S1 | | (S1/S2)*(LP2/LP1) |
| 1,67 | 3,76 | 3,45 | | 1,07 |

It can be seen from the table that eight forward speeds and one reverse speed are provided. Single upshifts and downshifts are done through a single clutch to single clutch transition.

The automatic transmission of FIGURE 2 has an input gearset PC3 and an output gearset PC21. It has three decks which are called deck 1, deck 2 and deck 3 beginning from the rear side of the transmission.

The input gearset PC3 is a planetary gearset with a ring gear R3, a sun gear S3 and two planet gears P3. The planet pinions carrier CR3 of the input gearset PC3 is constantly connected to the stationary member and provides reaction. The sun gear S3 of the input gearset PC3 is constantly connected to the input shaft In.

The output gearset PC21 is a Ravigneaux gearset, that is to say that the gearset is composed of two decks (deck 2 and deck 1, deck 3 belonging to the input gearset) with a common carrier CR21 and a long pinion (LP1, LP2) making the link between the two decks. The long pinion can be stepped (which means that the front and the rear gears of the long pinion may have different gear data (tooth count, pressure and helix angles, etc.) or not stepped. The output gearset PC21 comprises two sun gears S1, S2, two ring gears R1, R2 and two planet gears P1, P2. The planet pinions carrier CR21 of the output gearset PC21 is constantly connected to the output shaft (Out).

There are four rotating clutches C16, C5678, C2345, C47R and two braking clutches CB12R, CB38. The first rotating clutch C16 is configured to selectively couple the input shaft In with the sun gear S2 of the second deck belonging to the output gearset PC21, the second rotating clutch C5678 is configured to selectively couple the input shaft In with the ring gear R2 of the second deck of the output gearset PC21, the third rotating clutch C2345 is configured to selectively couple the ring gear R3 of the input gearset PC3 with the ring gear R1 of the first deck of the output gearset PC21, the fourth rotating clutch C47R is configured to selectively couple the ring gear R3 of the input gearset PC3 with the sun gear S1 of the first deck of the output gearset PC21, the first braking clutch CB12R is configured to selectively couple the planet pinions carrier CR3 of the input gearset PC3 with the ring gear R2 of the second deck of the output gearset PC21 and the second braking clutch CB38 is configured to selectively couple the sun gear S1 of the first deck of the output gearset PC21 with the stationary member.

The following table shows examples of available ratios and the corresponding spreads as well as the shift logic sequence of the clutches of the automatic transmission according to FIGURE 2.

| Gear state | Gear ratio | Ratio step | CB12R static | CB38 static | C16 dynamic | C2345 dynamic | C47R dynamic | C5678 dynamic |
|---|---|---|---|---|---|---|---|---|
| Rev | - | | X | | | | X | |
| | 4,228 | | | | | | | |
| N | | -0,89 | | | | | | |
| 1st | 4,759 | | X | | X | | | |
| 2nd | 3,392 | 1,40 | X | | | X | | |
| 3rd | 2,167 | 1,57 | | X | | X | | |
| 4th | 1,680 | 1,29 | | | | X | X | |
| 5th | 1,251 | 1,34 | | | | X | | X |
| 6th | 1,000 | 1,25 | | | X | | | X |
| 7th | 0,861 | 1,16 | | | | | X | X |
| 8th | 0,716 | 1,20 | | X | | | | X |

These values are given for the following teeth ratios:

| | | | | |
|---|---|---|---|---|
| R3/S3 | R3/S2 | R1/S1 | | (S1/S2)*(LP2/LP1) |
| 1,68 | 3,76 | 3,45 | | 1,07 |

It can be seen from the table that eight forward speeds and one reverse speed are provided. Single upshifts and downshifts are done through a single clutch to single clutch transition.

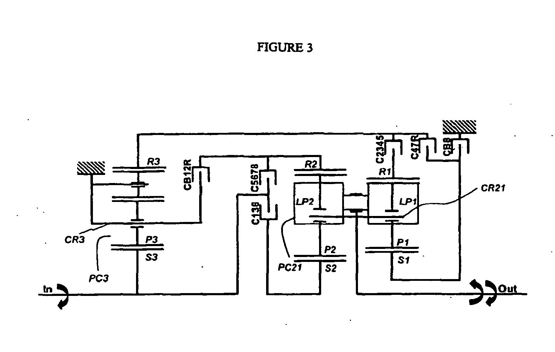

The automatic transmission of FIGURE 3 has an input gearset PC3 and an output gearset PC21. It has three decks which are called deck 1, deck 2 and deck 3 beginning from the rear side of the transmission.

The input gearset PC3 is a planetary gearset with a ring gear R3, a sun gear S3 and two planet gears P3. The planet pinions carrier CR3 of the input gearset PC3 is constantly connected to the stationary member and provides reaction. The sun gear S3 of the input gearset PC3 is constantly connected to the input shaft In.

The output gearset PC21 is a Ravigneaux gearset, that is to say that the gearset is composed of two decks (deck 2 and deck 1) with a common carrier and a long pinion (LP1, LP2) making the link between the two decks. The long pinion can be stepped (which means that the front and the rear gears of the long pinion may have different gear data (tooth count, pressure and helix angles, etc.) or not stepped. The output gearset PC21 comprises two sun gears S1, S2, two ring gears R1, R2 and two planet gears P1, P2. The planet pinions carrier CR21 of the output gearset PC21 is constantly connected to the output shaft (Out).

There are four rotating clutches C1356, C678, C234, C457R and two braking clutches CB12R, CB8. The first rotating clutch C1356 is configured to selectively couple the input shaft In with the sun gear S2 of the second deck belonging to the output gearset PC21, the second rotating clutch C678 is configured to selectively couple the input shaft In with the ring gear R2 of the second deck of the output gearset PC21, the third rotating clutch C234 is configured to selectively couple the ring gear R3 of the input gearset PC3 with the ring gear R1 of the first deck of the output gearset PC21, the fourth rotating clutch C457R is configured to selectively couple the ring gear R3 of the input gearset PC3 with the sun gear S1 of the first deck of the output gearset PC21, the first braking clutch CB12R is configured to selectively couple the planet pinions carrier CR3 of the input gearset PC3 with the ring gear R2 of the second deck of the output gearset PC21 and the second braking clutch CB8 is configured to selectively couple the sun gear S1 of the first deck of the output gearset PC21 with the stationary member.

The following table shows examples of available ratios and the corresponding spreads as well as the shift logic sequence of the clutches of the automatic transmission according to FIGURE 3.

| Gear state | Gear ratio | Ratio step | CB12R static | CB8 static | C1356 dynamic | C234 dynamic | C457R dynamic | C678 dynamic |
|---|---|---|---|---|---|---|---|---|
| Rev | - | | X | | | | X | |
| | 4,226 | | | | | | | |
| N | | -0,89 | | | | | | |
| 1st | 4,759 | | X | | X | | | |
| 2nd | 3,391 | 1,40 | X | | | X | | |
| 3rd | 2,247 | 1,51 | | | X | X | | |
| 4th | 1,680 | 1,34 | | | | X | X | |
| 5th | 1,264 | 1,33 | | | X | | X | |
| 6th | 1,000 | 1,26 | | | X | | | X |
| 7th | 0,861 | 1,16 | | | | | X | X |
| 8th | 0,716 | 1,20 | | X | | | | X |

These values are given for the following teeth ratios:

| | | | | |
|---|---|---|---|---|
| R3/S3 | R3/S2 | R1/S1 | | (S1/S2)*(LP2/LP1) |
| 1,68 | 3,76 | 3,45 | | 1,07 |

It can be seen from the table that eight forward speeds and one reverse speed are provided. Single upshifts and downshifts are done through a single clutch to single clutch transition.

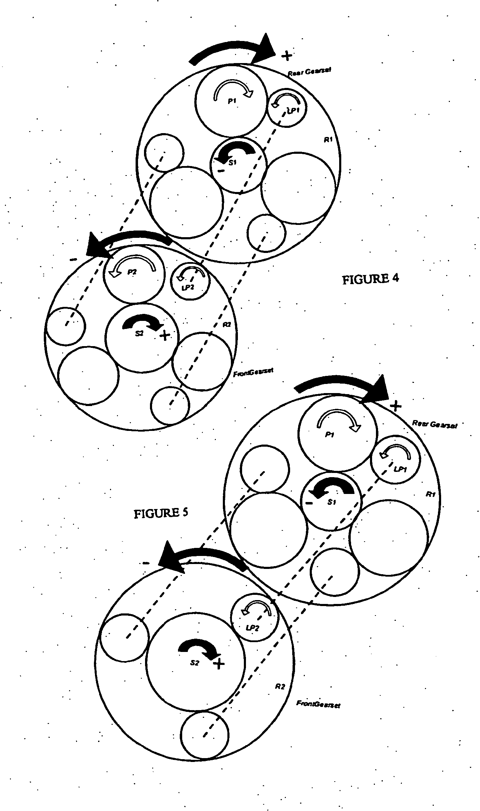

FIGURE 4 shows in detail the Ravigneaux gearset of the present invention. It differs from the classical configuration in that LP1 is not in the power path between S1 and R1 and LP2 is not in the power path between S2 and R2. Concretely, P1 transmits the power from S1 to R1 in the rear gearset and P2 transmits the power from S2 to R2 in the front gearset. LP1 meshes only with P1 and LP2 meshes only with R2. In each gearset, there are three planet gears meshing with S1 and R1 and, respectively with S2 and R2, as well as three long pinions LP1, respectively LP2.

In a second not claimed Ravigneaux gearset which is shown in FIGURE 5, the planet gears and the long pinions are also present in triplicate, but in this configuration, P1 transmits the power from S1 to R1 and LP2 transmits the power from S2 to R2. LP1 meshes only with P1. In this second gearset, there are no planet gears in the front gearset.

As can be seen in FIGURES 4 and 5, the front and the rear gearsets turn inversely. A person skilled in the art will choose between the first and the second configuration of the invention according to the required values of λ₁, λ₂, and K. Depending on these values, the front gearset and the rear gearset may also be inversed.

For each gearset, the configurations can also be used as if they were seen in a mirror: For example, in the first configuration of the invention, LP1 may mesh with P1 as well on the left as on the right side of P1.

## Claims

1. An automatic transmission comprising
an input shaft (In),
an output shaft (Out),
a stationary member,
an input gearset (PC3) being configured as planetary gearset, the planet pinions carrier (CR3) of which being constantly fixed to the stationary member in order to provide reaction and the front sun gear (S3) being constantly connected to the input shaft (In);
an output gearset (PC21) being configured as Ravigneaux gearset_{;}
first, second, third and fourth rotating clutches and first and second braking clutches being operative to selectively connect members of the input gearset (PC3) and of the output gearset (PC21) with the stationary member or with other members of the input gearset (PC3) and of the output gearset (PC21) to provide at least eight forward speed ratios and one reverse speed ratio; and
**characterised in that** in the Ravigneaux gearset
a first planet gear (P1) transmits the power from a first sun gear (S1) to a first ring gear (R1) and a second planet gear (P2) transmits the power from a second sun gear (S2) to a second ring gear (R2) and in which the long pinion (LP1) meshes with the first planet gear (P1) and the long pinion (LP2) meshes with the second ring gear (R2), the planet pinions carrier of which being constantly connected to the output shaft (Out)

2. The automatic transmission of claim 1 in which the first rotating clutch (C16,C136,C1356) is configured to selectively couple the input shaft (In) with a sun gear (S2) of the output gearset (PC21), the second rotating clutch (C678,C5678) is configured to selectively couple the input shaft (In) with a ring gear (R2) of the output gearset (PC21), the third rotating clutch (C234, C2345) is configured to selectively couple a ring gear (R3) of the input gearset (PC3) with a ring gear (R1) of the output gearset (PC21), the fourth rotating clutch (C47R) is configured to selectively couple the ring gear (R3) of the input gearset (PC3) with a sun gear (S1) of the output gearset (PC21), the first braking clutch (CB12R) is configured to selectively couple the planet pinions carrier (CR3) of the input gearset (PC3) with the ring gear (R2) of the output gearset (PC21) and the second braking clutch (CB8) is configured to selectively couple the sun gear (S1) of the output gearset (PC21) with the stationary member.

## Patentansprüche

1. Automatikgetriebe, das Folgendes umfasst:
eine Antriebswelle (In),
eine Abtriebswelle (Out),
ein stationäres Element,
einen Antriebs-Zahnradsatz (PC3), der als Planetenradsatz konfiguriert ist, wobei sein Planetenradträger (CR3) konstant am stationären Element fixiert ist, um eine Reaktion bereitzustellen,
und das vordere Sonnenrad (S3) konstant mit der Antriebswelle (In) verbunden ist;
einen Abtriebs-Zahnradsatz (PC21), der als Ravigneaux-Planetenradsatz konfiguriert ist;
erste, zweite, dritte und vierte Rotationskupplungen und erste und zweite Bremskupplungen, die dazu dienen, Elemente des Antriebs-Zahnradsatzes (PC3) und des Abtriebs-Zahnradsatzes (PC21) mit dem stationären Element oder mit anderen Elementen des Antriebs-Zahnradsatzes (PC3) und des Abtriebs-Zahnradsatzes (PC21) selektiv zu verbinden, um mindestens acht Vorwärtsübersetzungen und eine Rückwärtsübersetzung bereitzustellen; und
**dadurch gekennzeichnet, dass** im Ravigneaux-Planetenradsatz ein erstes Planetenrad (P1) die Kraft von einem ersten Sonnenrad (S1) auf ein erstes Ringrad (R1) überträgt und ein zweites Planetenrad (P2) die Kraft von einem zweiten Sonnenrad (S2) auf ein zweites Ringrad (R2) überträgt, und wobei die lange Ritzelwelle (LP1) in das erste Planetenrad (P1) eingreift und die lange Ritzelwelle (LP2) in das zweite Ringrad (R2) eingreift, dessen Planetenradträger konstant mit der Abtriebswelle (Out) verbunden ist.

2. Automatikgetriebe gemäß Anspruch 1, in dem die erste Rotationskupplung (C16, C136, C1356) dazu konfiguriert ist, die Antriebswelle (In) selektiv mit einem Sonnenrad (S2) des Abtriebs-Zahnradsatzes (PC21) zu koppeln, die zweite Rotationskupplung (C678, C5678) dazu konfiguriert ist, die Antriebswelle (In) selektiv mit einem Ringrad (R2) des Abtriebs-Zahnradsatzes (PC21) zu koppeln, die dritte Rotationskupplung (C234, C2345) dazu konfiguriert ist, ein Ringrad (R3) des Antriebs-Zahnradsatzes (PC3) selektiv mit einem Ringrad (R1) des Abtriebs-Zahnradsatzes (PC21) zu koppeln, die vierte Rotationskupplung (C47R) dazu konfiguriert ist, das Ringrad (R3) des Antriebs-Zahnradsatzes (PC3) selektiv mit einem Sonnenrad (S1) des Abtriebs-Zahnradsatzes (PC21) zu koppeln, die erste Bremskupplung (CB12R) dazu konfiguriert ist, den Planetenradträger (CR3) des Antriebs-Zahnradsatzes (PC3) selektiv mit dem Ringrad (R2) des Abtriebs-Zahnradsatzes (PC21) zu koppeln und die zweite Bremskupplung (CB8) dazu konfiguriert ist, das Sonnenrad (S1) des Abtriebs-Zahnradsatzes (PC21) selektiv mit dem stationären Element zu koppeln.

## Revendications

1. Une transmission automatique comprenant
un axe d'entrée (In),
un axe de sortie (Out)
un élément stationnaire,
un train d'engrenages d'entrée (PC3) étant configuré comme un train d'engrenages planétaire, dont le nez de pont planétaire (CR3) est constamment fixé à l'élément stationnaire afin de fournir une réaction et le planétaire avant (S3) est constamment raccordé à l'axe d'entrée (In) ;
un train d'engrenages de sortie (PC21) étant configuré comme un train d'engrenages Ravigneaux ;
un premier, deuxième, troisième et quatrième embrayage rotatif et un premier et deuxième embrayage de frein étant opérationnels pour raccorder de façon sélective des éléments du train d'engrenages d'entrée (PC3) et du train d'engrenages de sortie (PC21) à l'élément stationnaire ou à d'autres éléments du train d'engrenages d'entrée (PC3) et du train d'engrenages de sortie (PC21) pour fournir au moins huit rapports de transmission de marche avant et un rapport de transmission de marche arrière ; et
**caractérisée en ce que** dans le train d'engrenages Ravigneaux, un premier satellite (P1) transmet l'énergie à partir d'un premier planétaire (S1) à une première couronne (R1) et un deuxième satellite (P2) transmet l'énergie à partir d'un deuxième planétaire (S2) à une deuxième couronne (R2) et dans lequel le pignon long (LP1) s'engrène avec le premier satellite (P1) et le pignon long (LP2) s'engrène avec la deuxième couronne (R2), dont le nez de pont planétaire est constamment raccordé à l'axe de sortie (Out).

2. La transmission automatique de la revendication 1 dans laquelle le premier embrayage rotatif (C16, C136, C1356) est configuré pour raccorder de façon sélective l'axe d'entrée (In) à un planétaire (S2) du train d'engrenages de sortie (PC21), le deuxième embrayage rotatif (C678, C5678) est configuré pour raccorder de façon sélective l'axe d'entrée (In) à une couronne (R2) du train d'engrenages de sortie (PC21), le troisième embrayage rotatif (C234, C2345) est configuré pour raccorder de façon sélective une couronne (R3) du train d'engrenages d'entrée (PC3) à une couronne (R1) du train d'engrenages de sortie (PC21), le quatrième embrayage rotatif (C47R) est configuré pour raccorder de façon sélective la couronne (R3) du train d'engrenages d'entrée (PC3) à un planétaire (S1) du train d'engrenages de sortie (PC21), le premier embrayage de frein (CB12R) est configuré pour raccorder de façon sélective le nez de pont planétaire (CR3) du train d'engrenages d'entrée (PC3) à la couronne (R2) du train d'engrenages de sortie (PC21) et le deuxième embrayage de frein (CB8) est configuré pour raccorder de façon sélective le planétaire (S1) du train d'engrenages de sortie (PC21) à l'élément stationnaire.
